# EUROPEAN PATENT APPLICATION

(11) **EP 4 496 058 A1**
(43) Date of publication of application: **22.01.2025**
(21) Application number: 24187747.1
(22) Date of filing: 10.07.2024
(51) Int. Cl.: H01M 10/04, H01M 10/0587

(54) **METHOD FOR PRODUCING WOUND ELECTRODE ASSEMBLY, APPARATUS FOR PRODUCING WOUND ELECTRODE ASSEMBLY, AND POWER STORAGE DEVICE**

(30) Priority: 21.07.2023 JP 2023119116
(71) Applicant: Prime Planet Energy & Solutions, Inc., Chuo-ku Tokyo 103-0022 (JP)
(72) Inventor: MATSUDA, Jo, Tokyo, 103-0022 (JP)
(74) Representative: Kuhnen & Wacker Patent- und Rechtsanwaltsbüro PartG mbB

(57) **Abstract**

A method for producing a wound electrode assembly (1) includes a winding a lamination sheet (2) around a winding shaft (21) by feeding the lamination sheet (2) and by rotating the winding shaft (21), the winding shaft (21) having an outer circumferential surface of an oval shape including a pair of flat surfaces (21a) facing each other and a pair of arcked surfaces (21b) connecting both of ends of the pair of flat surfaces (21a) to each other ; and pressing the lamination sheet (2) formed to have an oval shape, such that a pair of flat portions (2a) of the lamination sheet (2) are pressed to each other. In the winding the lamination sheet (2), the lamination sheet (2) is fed by, per rotation of the winding shaft (21), a length longer than an outer circumferential length corresponding to the number of winds of the lamination sheet (2) wound around the winding shaft (21).

## Description

The present invention relates to a method for producing a wound electrode assembly, an apparatus for producing the wound electrode assembly, and a power storage device including the wound electrode assembly.

### BACKGROUND

For example, Japanese Laid-Open Patent Publication No. 2001-302034 discloses a method for producing a lithium ion secondary battery including a band-like positive electrode sheet, a band-like negative electrode sheet and separator sheets that are wound while being laminated on each other. According to the method described in Japanese Laid-Open Patent Publication No. 2001-302034, a winding core is rotated in a state where each of the sheets are supplied with a tension by a tension roller, and as a result, the sheets are wound around the winding core. Japanese Laid-Open Patent Publication No. 2001-302034 describes that in a state where the sheets are tension-free, for example, after the sheets are cut or when the winding of the sheets is finished, the sheets may occasionally move freely and may not be wound in a satisfactory manner. For this reason, a winding device described in Japanese Laid-Open Patent Publication No. 2001-302034 includes a support roller that keeps supplying a tensile force on the positive electrode sheet, which is the last sheet to be wound among the four sheets, until winding of an end portion thereof is finished.

### SUMMARY

At the time when a wound body of the sheets formed by winding the sheets around a winding shaft is molded by pressing, curved portions of the sheets are deformed. Therefore, at the time of pressing, a large stress is applied to the curved portions of the sheets. It is preferred that such a stress applied to the curved portions of the sheets is as small as possible.

A method for producing a wound electrode assembly disclosed herein includes winding a lamination sheet including a band-like positive electrode sheet, a band-like negative electrode sheet, a band-like first separator sheet and a band-like second separator sheet laminated in a predefined order around a winding shaft, the winding the lamination sheet including feeding the lamination sheet and rotating the winding shaft, and the winding shaft having an outer circumferential surface of an oval shape including a pair of flat surfaces facing each other and a pair of arcked surfaces connecting both of ends of the pair of flat surfaces to each other; and pressing the lamination sheet formed to have an oval shape by the winding, such that a pair of flat portions of the lamination sheet are pressed to each other. In the winding the lamination sheet, the lamination sheet is fed by, per rotation of the winding shaft, a length longer than an outer circumferential length corresponding to the number of winds of the lamination sheet wound around the winding shaft.

With the above-described method for producing the wound electrode assembly, in the winding the lamination sheet, the lamination sheet is fed by, per rotation of the winding shaft, a length longer than an outer circumferential length corresponding to the number of winds of the lamination sheet wound around the winding shaft. Therefore, each time the rotation shaft is rotated, a space is generated between an inner layer of the lamination sheet already wound around the winding shaft and an outer layer of the lamination sheet to be wound outer to the inner layer. In the pressing, the pressed portion of the lamination sheet may escape into the space. Therefore, the above-described method for producing the wound electrode assembly may alleviate the stress to be applied in the pressing to curved portions, of the lamination sheet, formed by the arcked surfaces of the winding shaft.

An apparatus for producing a wound electrode assembly disclosed herein is an apparatus for producing a wound electrode assembly including a lamination sheet in a wound state, the lamination sheet including a band-like positive electrode sheet, a band-like negative electrode sheet, a band-like first separator sheet and a band-like second separator sheet laminated in a predefined order. The apparatus includes a winding shaft having an outer circumferential surface of an oval shape including a pair of flat surfaces facing each other and a pair of arcked surfaces connecting both of ends of the pair of flat surfaces to each other, the winding shaft allowing the lamination sheet to be wound around the outer circumferential surface thereof; a winding shaft driving device rotating the winding shaft; a feeding device feeding the lamination sheet toward the winding shaft; and a controller controlling the winding shaft driving device to control the rotation of the winding shaft and controlling the feeding device to control a length of the lamination sheet to be fed. The controller controls the feeding device to feed the lamination sheet by, per rotation of the winding shaft, a length longer than an outer circumferential length corresponding to the number of winds of the lamination sheet wound around the winding shaft.

The above-described apparatus for producing a wound electrode assembly provides the same functions and effects as those of the above-described method for producing a wound electrode assembly.

A power storage device disclosed herein includes a wound electrode assembly including a lamination sheet in a state of being wound a plurality of times, the lamination sheet including a band-like positive electrode sheet, a band-like negative electrode sheet, a band-like first separator sheet and a band-like second separator sheet laminated in a predefined order. The wound electrode assembly is wound to have an oval shape including a pair of flat portions facing each other and a pair of arcked R portions connecting both of ends of the pair of flat portions to each other. The lamination sheet includes a plurality of curved portions forming the R portions, the plurality of curved portions being laminated on each other in a diametrical direction of the R portions. An inner circumferential length of one curved portion among the plurality of curved portions is longer than an outer circumferential length of another curved portion among the plurality of curved portions immediately inner to the one curved portion.

In the above-described power storage device, the inner circumferential length of one curved portion is longer than the outer circumferential length of another curved portion immediately inner to the one curved portion. Therefore, the stress applied to the curved portions of the wound electrode assembly is small for the above-described reason.

### BRIEF DESCRIPTION OF THE DRAWINGS

FIG. 1 is a schematic side view of a winding device and a feeding device.
FIG. 2 is a schematic front view of a press device.
FIG. 3 is a flowchart showing a part of a step for producing a wound electrode assembly.
FIG. 4 is a side view of the winding device and the feeding device when a winding shaft is at the 3 o'clock position.
FIG. 5 is a side view of the winding device and the feeding device when the winding shaft is at a position between the 3 o'clock position and the 6 o'clock position.
FIG. 6 is a side view of the winding device and the feeding device when the winding shaft is at the 6 o'clock position.
FIG. 7 is a schematic cross-sectional view of a lithium ion secondary battery.

### DETAILED DESCRIPTION

Hereinafter, a preferred embodiment of an apparatus for producing a wound electrode assembly of a power storage device will be described. The embodiment described herein is not intended to specifically limit the present invention, needless to say. The drawings show schematic views, and do not reflect any actual product embodying the present invention.

### [Configuration of the wound electrode assembly production apparatus]

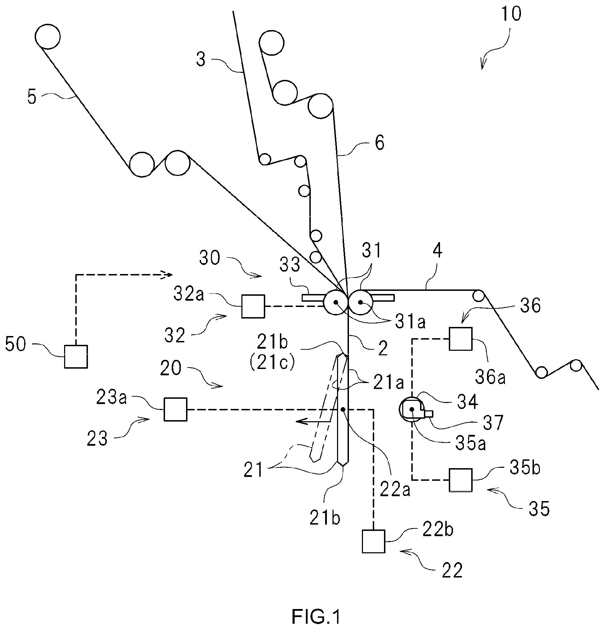

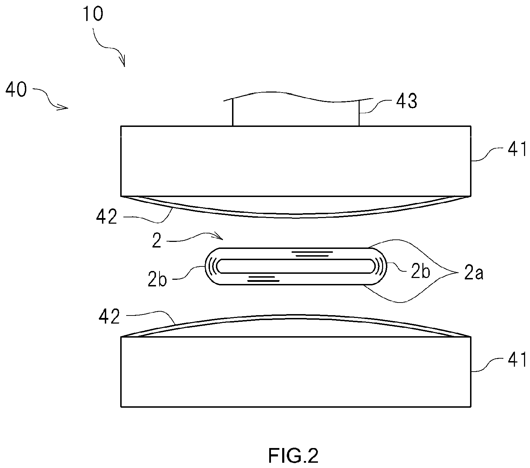

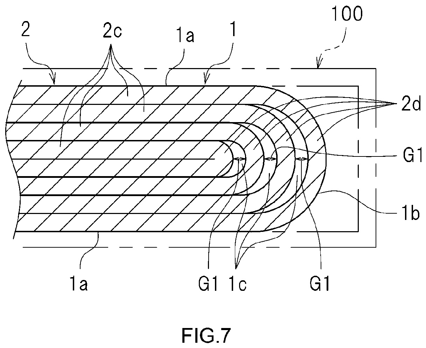

FIG. 1 is a schematic side view of a part of a wound electrode assembly production apparatus 10 according to a preferred embodiment, more specifically, a winding device 20 and a feeding device 30. FIG. 2 is a schematic front view of another part of the wound electrode assembly production apparatus 10, more specifically, a press device 40. The wound electrode assembly production apparatus 10 according to this preferred embodiment produces a wound electrode assembly 1 (see FIG. 7) including a wound lamination sheet 2. The lamination sheet 2 includes a band-like positive electrode sheet 3, a band-like negative electrode sheet 4, a band-like first separator sheet 5 and a band-like second separator sheet 6, which are laminated in a predefined order. The winding device 20 winds the lamination sheet 2 a plurality of times around an outer circumferential surface of a winding shaft 21 to form the lamination sheet 2 into an oval shape. The feeding device 30 feeds the lamination sheet 2 in accordance with an operation of the winding device 20. The press device 40 presses the lamination sheet 2 formed into the oval shape, such that the lamination sheet 2 is molded to be flatter. The wound electrode assembly production apparatus 10 also includes a final press device (not shown) further pressing the wound electrode assembly 1, which has been pressed by the press device 40.

In this embodiment, the wound electrode assembly production apparatus 10 produces the wound electrode assembly 1, which is a power generation element of a lithium ion secondary battery 100 (see FIG. 7). It should be noted that the wound electrode assembly 1 is not limited to being a wound electrode assembly of the lithium ion secondary battery 100, and may be a wound electrode assembly of any other known power storage device. A "power storage device" is a term referring to devices, in general, that are capable of extracting electrical energy, and encompasses so-called storage batteries (chemical batteries) such as lithium ion secondary batteries, nickel hydrogen batteries and the like, and also capacitors (physical batteries) such as electric double layer capacitors and the like.

The positive electrode sheet 3 includes a band-like current collecting foil having a predefined width and a predefined thickness (e.g., an aluminum foil) and a positive electrode active material layer containing a positive electrode active material formed on a surface thereof. In, for example, a lithium ion secondary battery, the positive electrode active material is a material capable of releasing lithium ions when being charged and absorbing lithium ions when being discharged, like a lithium transition metal composite material. The negative electrode sheet 4 includes a band-like current collecting foil having a predefined width and a predefined thickness (e.g., a copper foil) and a negative electrode active material layer containing a negative electrode active material formed on a surface thereof. In, for example, a lithium ion secondary battery, the negative electrode active material is a material capable of, when being charged, occluding lithium ions and, when being discharged, releasing lithium ions occluded when being charged, like natural graphite. Various materials other than those mentioned above have been proposed as the positive electrode active material and the negative electrode active material, and there is no specific limitation thereon.

The first separator sheet 5 and the second separator sheet 6 are each formed of, for example, a porous resin sheet that has a required level of heat resistance and may transmit an electrolyte. Various materials for the separators have been proposed, and there is no specific limitation thereon. In this embodiment, the wound electrode assembly 1 includes the lamination sheet 2, which includes the first separator sheet 5, the positive electrode sheet 3, the second separator sheet 6 and the negative electrode sheet 4 laminated in this order. The lamination sheet 2 of the wound electrode assembly 1 is wound such that the negative electrode sheet 4 is on an outermost side.

As shown in FIG. 1, the winding device 20 includes a winding shaft 21 having an outer circumferential surface around which the lamination sheet 2 is to be wound, a winding shaft driving device 22 rotating the winding shaft 21, and a winding shaft moving device 23 moving the winding shaft 21 such that the lamination sheet 2 is hung in a gravitational direction before being wound around the winding shaft 21. The feeding device 30 includes a pair of nip rollers 31 rotating while sandwiching the lamination sheet 2, a nip roller driving device 32 rotating the pair of nip rollers 31, a nip roller moving device 33 causing the pair of nip rollers 31 to be closer to, or to be away from, each other, a press roller 34 pressing the lamination sheet 2 toward the winding shaft 21, a press roller driving device 35 rotating the press roller 34, a following device 36 moving the press roller 34 such that the press roller 34 follows a movement of the winding shaft 21, and a press roller moving device 37 causing the press roller 34 to contact, or to separate from, the winding shaft 21. As shown in FIG. 1, the wound electrode assembly production apparatus 10 includes a controller 50 controlling operations of the winding device 20 and the feeding device 30.

The winding shaft 21 has an outer circumferential surface of an oval shape including a pair of flat surfaces 21a facing each other and a pair of arcked surfaces 21b connecting both of ends of the pair of flat surfaces 21a to each other. The winding shaft 21 has a flat shape with which a distance between the pair of arcked surfaces 21b is longer than a distance between the pair of flat surfaces 21a. The lamination sheet 2 is to be wound around the outer circumferential surface of the winding shaft 21. A depth direction with respect to the paper sheet of FIG. 1 is a width direction of the lamination sheet 2. Although not shown, the outer circumferential surface of the winding shaft 21 has a predetermined width wider than the width of the lamination sheet 2 in the width direction of the lamination sheet 2.

The winding shaft 21 forms the lamination sheet 2 into an oval shape that is close to the shape of the wound electrode assembly 1 in a finished state. Hereinafter, the lamination sheet 2 formed to have an oval shape by being wound around the winding shaft 21 will be referred to also as a "wound body of the lamination sheet 2". The lamination sheet 2 is formed to be the wound body having a shape corresponding to the shape of the outer circumferential surface of the winding shaft 21. As shown in FIG. 2, the wound body of the lamination sheet 2 includes a pair of flat portions 2a facing each other and a pair of arcked R portions 2b connecting both of ends of the pair of flat portions 2a to each other. The pair of flat portions 2a are formed by the pair of flat surfaces 21a of the winding shaft 21. The pair of R portions 2b are formed by the pair of arcked surfaces 21b of the winding shaft 21. The wound body of the lamination sheet 2 is also flat and has a longitudinal direction that is the same as the direction in which the pair of R portions 2b are aligned.

Hereinafter, flat portions and R portions of the post-press wound electrode assembly 1 will be referred to as a "pair of flat portions 1a" and a "pair of R portions 1b" (see FIG. 7) in order to be distinguished from the flat portions 2a and the R portions 2b of the pre-press lamination sheet 2. Regarding the post-press wound electrode assembly 1, a plurality of flat portions, of the lamination sheet 2, that are laminated on each other to form each of the flat portions 1a will each be referred to as a "straight portion 2c". The flat portions 1a of the wound electrode assembly 1 are each an assembly of the plurality of straight portions 2c laminated on each other. Regarding the post-press wound electrode assembly 1, a plurality of curved portions, of the lamination sheet 2, that are laminated on each other to form each of the R portions 1b will each be referred to as a "curved portions 2d". The curved portions 2d are laminated in a diametrical direction of the R portion 1b. The R portions 1b of the wound electrode assembly 1 are each an assembly of the plurality of curved portions 2d laminated on each other.

As shown in FIG. 1, the winding shaft driving device 22 rotates the winding shaft 21 about a rotation shaft 22a extending in the width direction of the lamination sheet 2 (the depth direction of the paper sheet of FIG. 1). The winding shaft driving device 22 includes a driving motor 22b rotating the winding shaft 21. Whether the driving motor 22b is to be rotated, or to be stopped, the rotation speed thereof, and the rotation angle thereof are controlled by the controller 50.

The winding shaft moving device 23 moves the winding shaft 21 in accordance with the rotation of the winding shaft 21, such that a trailing end of a portion, of the lamination sheet 2, that is wound around the winding shaft 21 is kept just below the nip rollers 31. A specific movement of the winding shaft 21 will be described below with reference to FIG. 1 and FIG. 4 through FIG. 6. As a result of the winding shaft 21 being moved by the winding shaft moving device 23, the lamination sheet 2 is fed in the gravitational direction before being wound around the winding shaft 21. As described below, the wound electrode assembly production apparatus 10 according to this preferred embodiment does not apply a tensile force on the lamination sheet 2 when the lamination sheet 2 is wound around the winding shaft 21. Therefore, the lamination sheet 2 is hung in the gravitational direction before being wound around the winding shaft 21.

The winding shaft moving device 23 includes, for example, a slide guide (not shown) engaged with the rotation shaft 22a of the winding shaft 21 such that the rotation shaft 22a is slidable in a left-right direction in FIG. 1, a driving motor 23a moving the rotation shaft 22a along the slide guide, and a ball screw mechanism (not shown) connected with the driving motor 23a. It should be noted that there is no specific limitation on the configuration of the winding shaft moving device 23. Whether the driving motor 23a is to be driven, or to be stopped, the rotation speed thereof, and the rotation angle thereof are controlled by the controller 50.

The pair of nip rollers 31 of the feeding device 30 rotate while sandwiching the lamination sheet 2. The pair of nip rollers 31 feed the lamination sheet 2 toward the winding shaft 21. The pair of nip rollers 31 are respectively rotatable about axial lines 31a extending in the width direction of the lamination sheet 2. The pair of nip rollers 31 are provided above the winding shaft 21. The lamination sheet 2 fed by the pair of nip rollers 31 advances downward by the action of the gravitational force because no tensile force is applied to the lamination sheet 2. The nip roller driving device 32 rotates the pair of nip rollers 31. In this embodiment, the nip roller driving device 32 includes a driving motor 32a rotating one of the pair of nip rollers 31. The other nip roller 31 rotates subordinately in accordance with the rotation of the nip roller 31 driven by the driving motor 32a. It should be noted that the nip roller driving device 32 may drive both of the pair of nip rollers 31. Whether the driving motor 32a is to be driven, or to be stopped, the rotation speed thereof, and the rotation angle thereof are controlled by the controller 50.

The nip roller moving device 33 causes the pair of nip rollers 31 to be closer to each other such that the pair of nip rollers 31 sandwich the lamination sheet 2, or causes the pair of nip rollers 31 to be away from each other such that the pair of nip rollers 31 release the lamination sheet 2. In this embodiment, the nip roller moving device 33 moves the left nip roller 31. The left nip roller 31 moves between a position where the left nip roller 31 may sandwich the lamination sheet 2 together with the right nip roller 31 and a position that is to the left, in FIG. 1, of the above-mentioned position and is away from the right nip roller 31. The nip roller moving device 33 includes, for example, an air cylinder (not shown) moving the left nip roller 31 in the left-right direction. It should be noted that the nip roller 31 moved by the nip roller moving device 33 may be the right nip roller 31, or both of the left and right nip rollers 31. The nip roller moving device 33 is not limited to a device of a type driven by an air cylinder. There is no specific limitation on the configuration of the nip roller moving device 33. The operation of the nip roller moving device 33 is controlled by the controller 50.

The press roller 34 presses the lamination sheet 2 wound along each of the arcked surfaces 21b of the winding shaft 21 toward the arcked surface 21b. The lamination sheet 2 including the current collecting foil, which is formed of a metal material, is pressed by the press roller 34 and thus is plastically deformed. As a result, the lamination sheet 2 is shaped to be along the shape of the outer circumferential surface of the winding shaft 21. In this manner, the lamination sheet 2 may be shaped to be along the shape of the outer circumferential surface of the winding shaft 21 with no tensile force being applied to the lamination sheet 2.

The press roller driving device 35 rotates the press roller 34. The press roller driving device 35 rotates the press roller 34 about a rotation shaft 35a extending in the width direction of the lamination sheet 2. The press roller driving device 35 includes a driving motor 35b rotating the press roller 34. Whether the driving motor 35b is to be rotated, or to be stopped, the rotation speed thereof, and the rotation angle thereof are controlled by the controller 50. The press roller 34 is rotated by a driving force of the driving motor 35b in this manner. The press roller 34 is to cause the shape of the lamination sheet 2 to be along the shape of the outer circumferential surface of the winding shaft 21 and also to rotate to feed the lamination sheet 2 on each of the arcked surfaces 21b. It should be noted that a press member that causes the shape of the lamination sheet 2 to be along the shape of the outer circumferential surface of the winding shaft 21 does not need to be associated with the feeding of the lamination sheet 2. Such a press member may be, for example, a member that does not rotate and is warped following the movement of the arcked surfaces 21b.

The following device 36 moves the press roller 34 such that the press roller 34 moves along each of the arcked surfaces 21b of the winding shaft 21 in accordance with the movement of the arcked surface 21b. The following device 36 moves the press roller 34 and thus keeps the press roller 34 in contact with the arcked surface 21b, which is moved by the rotation of the winding shaft 21 and the driving of the winding shaft moving device 23. In this embodiment, the following device 36 keeps the press roller 34 in contact with the winding shaft 21 while the lamination sheet 2 is wound along about a half of the outer circumferential surface of the winding shaft 21. The timing at which the following device 36 puts the press roller 34 into contact with the winding shaft 21 will be described below.

The following device 36 includes, for example, a slide guide (not shown) engaged with the press roller 34 such that the press roller 34 is slidable in an up-down direction, a driving motor 36a moving the press roller 34 along the slide guide, and a ball screw mechanism (not shown) connected with the driving motor 36a. It should be noted that there is no specific limitation on the configuration of the following device 36. Whether the driving motor 36a is to be driven, or to be stopped, the rotation speed thereof, and the rotation angle thereof are controlled by the controller 50.

The press roller moving device 37 causes the press roller 34 to contact, or to separate from, each of the arcked surfaces 21b of the winding shaft 21. The press roller moving device 37 moves the press roller 34 between a position where the press roller 34 is capable of contacting the winding shaft 21 just below the nip rollers 31 and a position which is to the right, in FIG. 1, of the above-mentioned position and at which the press roller 34 does not contact the winding shaft 21. The press roller moving device 37 includes, for example, an air cylinder (not shown) moving the press roller 34 in the left-right direction. It should be noted that there is no specific limitation on the configuration of the press roller moving device 37. The operation of the press roller moving device 37 is controlled by the controller 50.

The controller 50 controls the winding shaft driving device 22 to control the rotation of the winding shaft 21, and also controls the feeding device 30 to control a length of the lamination sheet 2 to be fed. In more detail, the controller 50 controls the feeding device 30 to feed the lamination sheet 2 by, per rotation of the winding shaft 21, a length longer than an outer circumferential length corresponding to the number of winds of the lamination sheet 2 wound around the winding shaft 21. The lamination sheet 2 is fed in this manner, and as a result, an outer circumferential length of a portion of the lamination sheet 2 that is already wound around the winding shaft 21 (hereinafter, such a portion of the lamination sheet 2 will be referred to also as an "inner layer of the lamination sheet 2") is shorter than an inner circumferential length of a portion of the lamination sheet 2 that is to be wound around the inner layer of the lamination sheet 2 (hereinafter, such a portion of the lamination sheet 2 will be referred to also as an "outer layer of the lamination sheet 2"). That is, the inner circumferential length of the outer layer of the lamination sheet 2 is longer than the outer circumferential length of the inner layer of the lamination sheet 2. As a result, each time the rotation shaft 21 is rotated, a space is generated between the inner layer of the lamination sheet 2 and the outer layer of the lamination sheet 2. An effect provided by the space will be described below.

The outer circumferential length of the lamination sheet 2 wound around the winding shaft 21 becomes longer as the number of winds increases. The controller 50 increases the length of the lamination sheet 2 to be fed by the feeding device 30 each time the number of winds of the lamination sheet 2 increases. In this embodiment, the controller 50 calculates a sum of the increase in the outer circumferential length caused by the increase in the number of winds, a predetermined additional length provided to generate a space, and the outer circumferential length of the inner layer of the lamination sheet 2, and thus sets the found sum as the length of the outer layer of the lamination sheet 2. In this preferred embodiment, the additional length provided to generate a space is fixed regardless of the number of winds. However, the additional length does not need to be fixed.

The above-described additional length is set to, for example, such a length as to generate spaces 1c each having a gap G1 between the plurality of curved portions 2d of the lamination sheet 2 (see FIG. 7). The gap G1 is found by multiplying the thickness of the lamination sheet 2 by a predetermined magnification. The spaces 1c are post-press spaces. In the case where, for example, the thickness of the lamination sheet 2 is 0.3 mm and the magnification is 50%, the gap G1 is set to 0.15 mm. The above-mentioned magnification is preferably, for example, 30% or higher and 100% or lower. It should be noted that there is no specific limitation on the magnification. Regarding the calculation of the additional length, the gap G1 is regarded as an addition to the radius of each of the curved portions 2d. Therefore, the additional length is found by multiplying the gap G1 by the ratio of the circumference and then multiplying the resultant value by 2 (the resultant value is multiplied by 2 because the curved portions 2d are present at both of the two ends). It should be noted that the above-described method for setting the additional length is merely one example, and the method is not limited to this.

In this preferred embodiment, for at least a part of a time period in which the lamination sheet 2 is being wound along each of arcked surfaces 21b, the controller 50 controls the feeding device 30 to feed the lamination sheet 2 at a speed higher than the speed at which the lamination sheet 2 is wound along the arcked surface 21b. With such control, while being wound along each arcked surface 21b, the lamination sheet 2 is fed by a length longer than the outer circumferential length corresponding to the number of winds of the lamination sheet 2 wound along the arcked surface 21b. As a result, a space is easily formed by an excessive part of the lamination sheet 2 that has been fed, in each of the R portions 2b of the wound body of the lamination sheet 2. In this preferred embodiment, for the rest of the above-mentioned time period, the controller 50 feeds the lamination sheet 2 at a speed same as the speed at which the lamination sheet 2 is wound around the winding shaft 21. With such control, very little space is formed by an excessive part of the lamination sheet 2 that has been fed, in each of the flat portions 2a of the lamination sheet 2.

In more detail, for at least a part of the time period in which the lamination sheet 2 is being wound along each arcked surface 21b, the controller 50 controls the nip roller moving device 33 to cause the pair of nip rollers 31 to be away from each other. For the above-mentioned part of the time period, the controller 50 also controls the press roller moving device 37 and the press roller driving device 35 to rotate the press roller 34 in a state where the press roller 34 is in contact with the arcked surface 21b. In this state, the feeding speed of the lamination sheet 2 is controlled by the rotation speed of the press roller 34. The controller 50 controls such that the feeding speed of the lamination sheet 2 by the press roller 34 is higher than the speed at which the lamination sheet 2 is wound along the arcked surface 21b.

For the rest of the above-mentioned time period, the controller 50 controls the press roller moving device 37 to cause the press roller 34 to separate from the winding shaft 21. For the rest of the above-mentioned time period, the controller 50 also controls the nip roller moving device 33 and the nip roller driving device 32 to cause the pair of nip rollers 31 to sandwich and feed the lamination sheet 2. In this state, the feeding speed of the lamination sheet 2 is controlled by the rotation speed of the nip rollers 31. The controller 50 controls such that the feeding speed of the lamination sheet 2 by the pair of nip rollers 31 is the same as the speed at which the lamination sheet 2 is wound around the winding shaft 21.

The press device 40 presses the wound body of the lamination sheet 2 such that the pair of flat portions 2a are pressed to each other. As shown in FIG. 2, the press device 40 includes a pair of press members 41 facing each other and respectively pressing the pair of flat portions 2a of the lamination sheet 2, a pair of leaf springs 42 respectively provided for the pair of press members 41, and a driver 43 causing the pair of press members 41 to be closer to each other and to press the lamination sheet 2. The leaf springs 42 are each curved to protrude toward the press member 41 facing the corresponding press member 41, and are each located such that an apex of the protrusion is at a center (center in the longitudinal direction of the wound body of the lamination sheet 2) of the corresponding press member 41. The press device 40 is configured such that the press members 41 press the flat portions 2a of the wound body of the lamination sheet 2 via the leaf springs 42.

In this preferred embodiment, the wound body of the post-press lamination sheet 2 is further pressed by the final press device different from the press device 40, and thus is compressed to have a predetermined thickness. The final press device includes no leaf spring and presses the lamination sheet 2 by use of press members. It should be noted that the above-described final press may be performed also by the press device 40. The press device 40 may be a part of, or the entirety of, a press apparatus in a broad sense that presses the wound body of the lamination sheet 2 such that the pair of flat portions 2a are pressed to each other, and thus forms the wound electrode assembly 1 by molding.

### [Method for producing the wound electrode assembly]

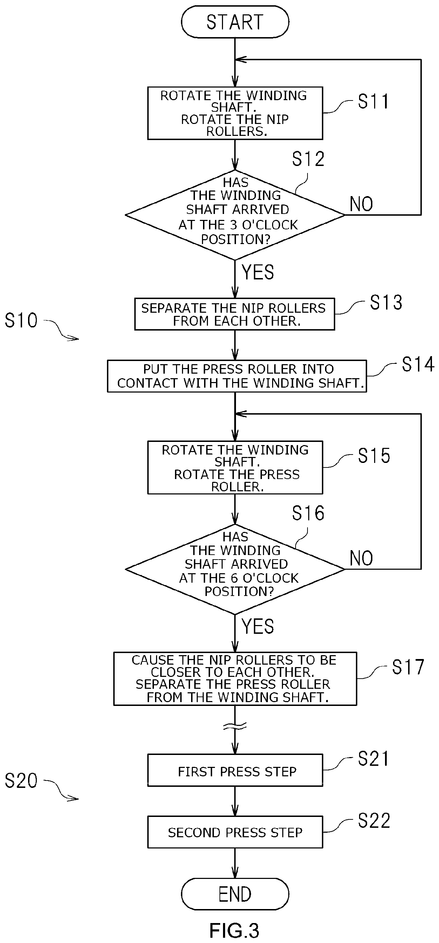

FIG. 3 is a flowchart showing a part of the step for producing the wound electrode assembly 1. As shown in FIG. 3, the step for producing the wound electrode assembly 1 includes a winding step S10 of feeding the lamination sheet 2 including the band-like positive electrode sheet 3, the band-like negative electrode sheet 4, the band-like first separator sheet 5 and the band-like negative separator sheet 6 laminated in a predefined order, and rotating the winding shaft 21 having an outer circumferential surface of an oval shape, and thus winding the lamination sheet 2 around the outer circumferential surface of the winding shaft 21; and a press step S20 of pressing the lamination sheet 2 (wound body of the lamination sheet 2) formed to have an oval shape in the winding step S10, such that the pair of flat portions 2a are pressed to each other. The press step S20 includes a first press step S21 of using the press device 40 and a second press step S22 of using the final press device.

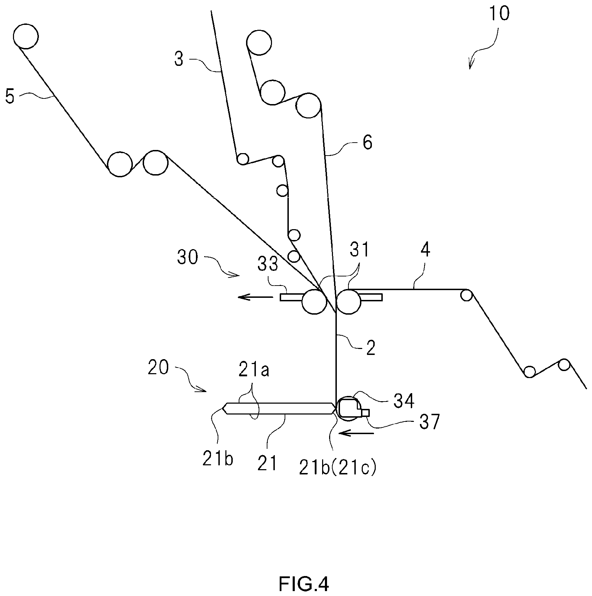

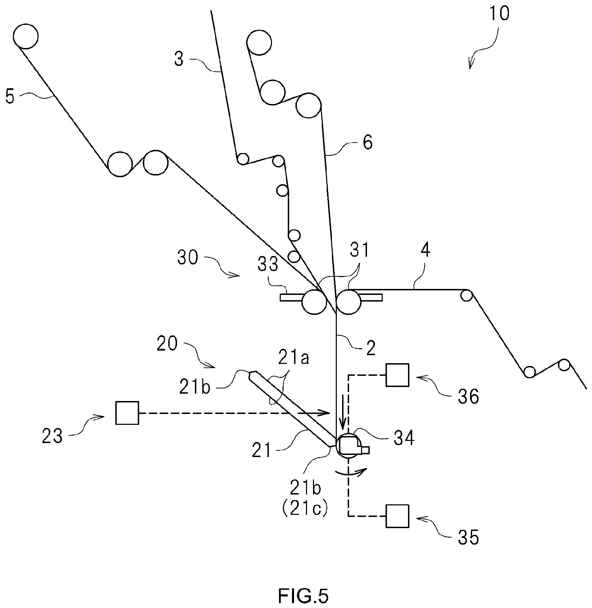

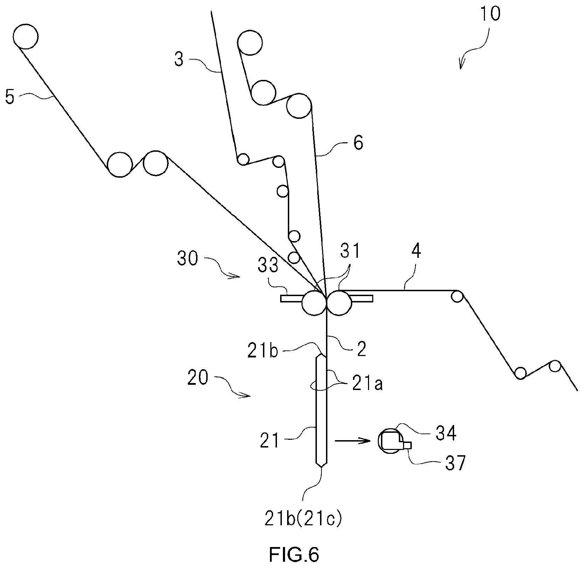

First, the winding step S10 will be described in detail. FIG. 4 through FIG. 6 are each a side view of the winding device 20 and the feeding device 30 in the middle of the winding step S10. Hereinafter, the rotation position of the winding shaft 21 will be represented by the direction in which an end 21c of the winding shaft 21 is directed (in this embodiment, the end 21c is one of the arcked surfaces 21b, and is directed upward (12 o'clock position) in FIG. 1). FIG. 1 shows the winding device 20 and the feeding device 30 in a state where the winding shaft 21 is at the 12 o'clock position. FIG. 1 also shows the winding shaft 21 in a state of being rotated slightly from the 12 o'clock position with the two-dot chain line. As shown in FIG. 1, the rotation direction of the winding shaft 21 is clockwise. FIG. 4 shows the winding device 20 and the feeding device 30 in a state where the winding shaft 21 is at the 3 o'clock position. FIG. 5 shows the winding device 20 and the feeding device 30 in a state where the winding shaft 21 is at a position between the 3 o'clock position and the 6 o'clock position. FIG. 6 shows the winding device 20 and the feeding device 30 in a state where the winding shaft 21 is at the 6 o'clock position.

As shown in FIG. 3, the winding step S10 includes steps S11 through S17. In step S11, the rotation of the winding shaft 21 is started, and the nip rollers 31 are rotated to feed the lamination sheet 2 toward the winding shaft 21. As shown in FIG. 1, the pair of nip rollers 31 sandwich the lamination sheet 2 at this point. In step S11, the nip rollers 31 rotate so as to feed the lamination sheet 2 at a speed same as the speed at which the lamination sheet 2 is wound around the winding shaft 21. As a result of the lamination sheet 2 being fed at a speed same as the speed at which the lamination sheet 2 is wound around the winding shaft 21, no tensile force is applied to the lamination sheet 2. As shown in FIG. 1, the press roller 34 is at a retracted position to the right of the winding shaft 21 at this point.

In step S11, as shown in FIG. 1, the position of the end 21c with respect to the rotation shaft 22a of the winding shaft 21 is gradually moved rightward. In step S11, the winding shaft 21 is gradually moved leftward in order to keep the position of the end 21c of the winding shaft 21 in the left-right direction at a position just below the pair of nip rollers 31. Such control allows the lamination sheet 2, which is hung in the gravitational direction because no tensile force is applied thereto, to be wound around the winding shaft 21. In step S11, one of the flat portions 2a is formed by the corresponding flat surface 21a.

In step S12, it is determined whether or not the winding shaft 21 has arrived at the 3 o'clock position. In the case where the winding shaft 21 has not arrived at the 3 o'clock position (NO in step S12), step S11 is continued.

In the case where the winding shaft 21 has arrived at the 3 o'clock position (YES in step S12), in step S13, the pair of nip rollers 31 are caused to be away from each other, and the lamination sheet 2 is released from the state of being sandwiched by the nip rollers 31 (see FIG. 4). In step S14, as shown in FIG. 4, the press roller 34 moves leftward and contacts one of the arcked surfaces 21b of the winding shaft 21 to sandwich the lamination sheet 2 together with the winding shaft 21. Step S13 and step S14 may be performed in the opposite direction or at the same time.

In step S15, the winding shaft 21 is rotated, and the press roller 34 is also rotated. In step S15, formation of one of the R portions 2b by the corresponding arcked surface 21b is mainly performed. As shown in FIG. 5, in step S15, the winding shaft 21 is gradually moved rightward by the winding shaft moving device 23. As a result, the position of the end 21c of the winding shaft 21 in the left-right direction is kept at a position just below the pair of nip rollers 31. At the same time, the press roller 34 is gradually moved downward by the following device 36. As a result, the press roller 34 moves along the arcked surface 21b of the winding shaft 21 in accordance with the movement of the arcked surface 21b. The press roller 34 moves on the arcked surface 21b of the winding shaft 21 while sandwiching the lamination sheet 2 together with the arcked surface 21b, so that the lamination sheet 2 is shaped to be along the shape of the arcked surface 21b.

In step S15, the press roller 34 is rotating and feeding the lamination sheet 2 downward. A portion of the lamination sheet 2 that is upstream with respect to the press roller 34 is supplied with a tensile force. By contrast, a portion of the lamination sheet 2 that is downstream with respect to the press roller 34 is supplied with no tensile force. In step S15, the press roller 34 rotates so as to feed the lamination sheet 2 at a speed higher than the speed at which the lamination sheet 2 is wound around the winding shaft 21. As a result, the lamination sheet 2 wound along the arcked surface 21b is slackened. Such control allows the lamination sheet 2 to be adjusted to be arc-shaped and allows a space to be formed between the curved portion 2d of the inner layer of the lamination sheet 2 and the curved portion 2d of the outer layer of the lamination sheet 2.

In step S16, it is determined whether or not the winding shaft 21 has arrived at the 6 o'clock position. In the case where the winding shaft 21 has not arrived at the 6 o'clock position (NO in step S16), step S15 is continued. In the case where the winding shaft 21 has arrived at the 6 o'clock position (YES in step S16), in step S17, the press roller 34 is separated from the winding shaft 21 (see FIG. 6). In step S17, the pair of nip rollers 31 get closer to each other, and the lamination sheet 2 is sandwiched by the nip rollers 31 again (see FIG. 6). The winding step S10 for a half of one rotation of the winding shaft 21 is finished with the finish of step S17. The winding step S10 for another half of one rotation of the winding shaft 21 is substantially the same as that for the first half, and will not be described. The winding step S10 for one rotation of the winding shaft 21 is repeated, and as a result, the lamination sheet 2 is wound around the winding shaft 21 a plurality of times.

In the first press step S21, the pressing is started with a part of the pair of flat portions 2a of the lamination sheet 2 (in this embodiment, a central portion, in the longitudinal direction, of the wound body), and the pressing is performed such that the pressed region spreads toward the pair of R portions 2b of the lamination sheet 2 formed to have an oval shape.

In the first press step S21, the leaf springs 42 are each sandwiched between the corresponding press member 41 and the lamination sheet 2, and thus is gradually crushed outward from the apex of the protrusion. In this manner, the pressing is started with a part of the pair of flat portions 2a of the lamination sheet 2 (in this embodiment, a central portion), and the pressed region spreads toward the pair of R portions 2b of the lamination sheet 2. As a result, spaces that are also present between the plurality of layers in the flat portions 2a of the wound body of the lamination sheet 2 are crushed. The excessive parts of the lamination sheet 2 generated as a result of the spaces being crushed are absorbed by the plurality of curved portions 2d. As a result, the spaces between the plurality of curved portions 2d are expanded, and as shown in FIG. 7, the spaces 1c each having a gap G1 as an intended value are formed. The first press step S21 is performed to collect the spaces to the R portions 1b.

In the second press step S22, the wound body of the lamination sheet 2 is further pressed until the wound body has a predefined thickness. As a result, the wound electrode assembly 1 is formed.

FIG. 7 is a schematic cross-sectional view of the lithium ion secondary battery 100 including the wound electrode assembly 1. It should be noted that FIG. 7 does not show elements of the lithium ion secondary battery 100 other than the wound electrode assembly 1. As shown in FIG. 7, in the wound electrode assembly 1 after the press step S20, the plurality of straight portions 2c of the lamination sheet 2 have an equal length to each other, and almost no space is present between the plurality of straight portions 2c. By contrast, the inner circumferential length of one curved portion 2d is longer than the outer circumferential length of another curved portion 2d immediately inner to the one curved portion 2d. The spaces 1c each having the gap G1 (intended value) are each formed between one curved portion 2d and another curved portion 2d immediately inner to the one curved portion 2d.

### [Functions and effects of the embodiment]

Hereinafter, functions and effects provided by the wound electrode assembly production apparatus 10 and the method for producing the wound electrode assembly 1 according to this preferred embodiment will be described.

The wound electrode assembly production apparatus 10 according to this preferred embodiment is an apparatus for producing the wound electrode assembly 1 including the lamination sheet 2 in a wound state. The lamination sheet 2 includes the band-like positive electrode sheet 3, the band-like negative electrode sheet 4, the band-like first separator sheet 5 and the band-like second separator sheet 6 laminated in a predefined order. The wound electrode assembly production apparatus 10 includes the winding shaft 21 having an outer circumferential surface of an oval shape including the pair of flat surfaces 21a facing each other and the pair of arcked surfaces 21b connecting both of the ends of the pair of flat surfaces 21a to each other, the winding shaft 21 allowing the lamination sheet 2 to be wound around the outer circumferential surface thereof; the winding shaft driving device 22 rotating the winding shaft 21; the feeding device 30 feeding the lamination sheet 2 toward the winding shaft 21; and the controller 50 controlling the winding shaft driving device 22 to control the rotation of the winding shaft 21 and controlling the feeding device 30 to control a length of the lamination sheet 2 to be fed. The controller 50 controls the feeding device 30 to feed the lamination sheet 2 by, per rotation of the winding shaft 21, a length longer than an outer circumferential length corresponding to the number of winds of the lamination sheet 2 wound around the winding shaft 21.

With the wound electrode assembly production apparatus 10 having such a configuration, the lamination sheet 2 is fed by, per rotation of the winding shaft 21, a length longer than an outer circumferential length corresponding to the number of winds of the lamination sheet 2 wound around the winding shaft 21. Therefore, each time the rotation shaft 21 is rotated, a space is generated between the inner layer of the lamination sheet 2 already wound around the winding shaft 21 and the outer layer of the lamination sheet 2 to be wound outer to the inner layer. In the press step S20, the pressed portion of the lamination sheet 2 may escape into the space. Therefore, the wound electrode assembly production apparatus 10 having such a configuration may alleviate the stress to be applied to the R portions 2b of the lamination sheet 2 in the press step S20.

In the case where the laminate sheet 2 is wound around the winding shaft 21 while a tensile force is applied to the lamination sheet 2, no space is generated between the inner layer of the lamination sheet 2 and the outer layer of the lamination sheet 2. Therefore, when the R portions 2b of the lamination sheet 2 are deformed in the press step S20, a large stress is applied to the R portions 2b of the lamination sheet 2. In addition, at the time of charge and discharge of the power storage device, the wound electrode assembly 1 is expanded and contracted. Such expansion and contraction of the wound electrode assembly 1 also applies a large stress to the R portions 2b of the lamination sheet 2. In the case where the number of winds of the lamination sheet 2 is increased in an attempt to increase the capacitance of the power storage device, the wound electrode assembly 1 is expanded and contracted to a higher degree. From the point of view of the durability and the reliability of the R portions 2b, it is preferred that the stress to be applied to the R portions 2b of the lamination sheet 2 is small. With the wound electrode assembly production apparatus 10 according to this preferred embodiment, a space is formed between the inner layer of the lamination sheet 2 and the outer layer of the lamination sheet 2, so that the stress to be applied to the R portions 2b of the lamination sheet 2 may be alleviated.

The wound electrode assembly production apparatus 10 according to this preferred embodiment includes the press roller 34 pressing the lamination sheet 2 wound along each of the arcked surfaces 21b of the winding shaft 21 toward the arcked surface 21b. With such a configuration, the press roller 34 presses the lamination sheet 2, so that the lamination sheet 2 may be shaped to be along the shape of the outer circumferential surface of the winding shaft 21 with no tensile force being applied to the lamination sheet 2.

In this preferred embodiment, for at least a part of a time period in which the lamination sheet 2 is being wound along each of the arcked surfaces 21b, the controller 50 controls the feeding device 30 to feed the lamination sheet 2 at a speed higher than a speed at which the lamination sheet 2 is wound along the arcked surface 21b. With such control, while being wound along the arcked surface 21b, the lamination sheet 2 may be fed by a length longer than an outer circumferential length corresponding to the number of winds of the lamination sheet 2 wound along the arcked surface 21b. As a result, the lamination sheet 2 wound along the arcked surface 21b is slackened, and a space may be formed between the curved portion 2d of the inner layer and the curved portion 2d of the outer layer. In this embodiment, for a second half of the time period in which the lamination sheet 2 is being wound along the arcked surface 21b (time period shown in FIG. 5), the lamination sheet 2 is fed at a speed higher than the speed at which the lamination sheet 2 is wound along the arcked portion 2b.

In this preferred embodiment, the feeding device 30 includes the pair of nip rollers 31 rotating while sandwiching the lamination sheet 2 and feeding the lamination sheet 2 toward the winding shaft 21, the nip roller driving device 32 rotating the pair of nip rollers 31, the nip roller moving device 33 causing the pair of nip rollers 31 to be closer to each other such that the pair of nip rollers 31 sandwich the lamination sheet 2, or causing the pair of nip rollers 31 to be away from each other such that the pair of nip rollers 31 release the lamination sheet 2, the press roller 34 pressing the lamination sheet 2 wound along each of the arcked surfaces 21b of the winding shaft 21 toward the arcked surface 21b, the press roller driving device 35 rotating the press roller 34, and the press roller moving device 37 causing the press roller 34 to contact, or to separate from, each of the arcked surfaces 21b.

For at least a part of the time period in which the lamination sheet 2 is being wound along each of the arcked surfaces 21b, the controller 50 controls the nip roller moving device 33 to cause the pair of nip rollers 31 to be away from each other, and controls the press roller moving device 37 and the press roller driving device 35 to rotate the press roller 34 in a state where the press roller 34 is in contact with the arcked surface 21b. For the rest of the time period, the controller 50 controls the press roller moving device 37 to cause the press roller 34 to separate from the winding shaft 21, and controls the nip roller moving device 33 and the nip roller driving device 32 to cause the pair of nip rollers 31 to sandwich and feed the lamination sheet 2. The controller 50 causes the pair of nip rollers 31 to feed the lamination sheet 2 at a speed same as a speed at which the lamination sheet 2 is wound around the winding shaft 21. The controller 50 causes the press roller 34 to feed the lamination sheet 2 at a speed higher than the speed at which the lamination sheet 2 is wound along each of the arcked surfaces 21b.

With such a configuration, for at least a part of the time period in which the lamination sheet 2 is being wound along each of the arcked surfaces 21b, the feeding speed of the lamination sheet 2 is controlled by the rotation speed of the press roller 34. Therefore, the rotation speed of the press roller 34 is controlled for the above-described part of the time period, so that the feeding speed of the lamination sheet 2 may be made higher than the speed at which the lamination sheet 2 is wound along the arcked surface 21b.

The wound electrode assembly production apparatus 10 according to this preferred embodiment starts pressing the lamination sheet 2 from a part of the pair of flat portions 2a thereof and spreads a pressed region toward the pair of R portions 2b of the lamination sheet 2. With such a configuration, spaces that are also present between the plurality of layers in the flat portions 2a of the wound body of the lamination sheet 2 are crushed by the above-described step, and the spaces 1c each having a desired gap G1 are formed between the plurality of curved portions 2d. This may further alleviate the stress to be applied to the R portions 2b.

In more detail, the wound electrode assembly production apparatus 10 according to this preferred embodiment further includes the press device 40 pressing the wound body of the lamination sheet 2 such that the pair of flat portions 2a thereof are pressed to each other. The press device 40 includes the pair of press members 41 facing each other and respectively pressing the pair of flat portions 2a of the lamination sheet 2, and the pair of leaf springs 42 respectively provided for the pair of press members 41 and each curved to protrude toward the press member 41 facing the corresponding press member 41. With such a configuration, the press device 40 may start pressing the lamination sheet 2 from a part of the pair of flat portions 2a thereof and spread the pressed region toward the pair of R portions 2b of the lamination sheet 2.

In this preferred embodiment, a power storage device (in this embodiment, the lithium ion secondary battery 100) as follows may be provided. The lithium ion secondary battery 100 includes the wound electrode assembly 1 including the lamination sheet 2 in a state of being wound a plurality of times. The lamination sheet 2 includes the band-like positive electrode sheet 3, the band-like negative electrode sheet 4, the band-like first separator sheet 5 and the band-like second separator sheet 6 laminated in a predefined order. In the lithium ion secondary battery 100 according to this preferred embodiment, the wound electrode assembly 1 is wound to have an oval shape including the pair of flat portions 1a facing each other and the pair of arcked R portions 1b connecting both of ends of the pair of flat portions 1a to each other. The lamination sheet 2 includes the plurality of curved portions 2d forming the R portions 1b, the plurality of curved portions 2d being laminated on each other in a diametrical direction of the R portions 1b. An inner circumferential length of one curved portion 2d is longer than an outer circumferential length of another curved portion 2d immediately inner to the one curved portion 2d. With the lithium ion secondary battery 100 having such a configuration, the stress to be applied to the R portions 1b of the wound electrode assembly 1 may be alleviated for the above-described reason.

In the lithium ion secondary battery 100 according to this preferred embodiment, the space 1c is provided between one curved portion 2d and the another curved portion 2d immediately inner to the one curved portion 2d. With the lithium ion secondary battery 100 having such a configuration, the stress to be applied to the R portions 1b of the wound electrode assembly 1 may be alleviated for the above-described reason.

In the lithium ion secondary battery 100 according to this preferred embodiment, the lamination sheet 2 includes the plurality of straight portions 2c laminated on each other to form the flat portions 1a. The plurality of straight portions 2c have an identical length to each other. With such a configuration, even when the laminate sheet 2 is expanded and contracted by the charge and discharge of the lithium ion secondary battery 100, no difference is caused to the length of the plurality of straight portions 2c. Therefore, no space is easily formed between the plurality of straight portions 2c (the plurality of straight portions 2c are not easily peeled off from each other), and thus the lithium ion secondary battery 100 is not deteriorated easily.

### [Other embodiments]

A preferred embodiment of an apparatus for producing a wound electrode assembly proposed herein is described above. The above-described embodiment is merely an example, and the present invention may be carried out in any of other embodiments. For example, in the above-described preferred embodiment, when the lamination sheet 2 is to be wound along each of the arcked surfaces 21b of the winding shaft 21, the feeding speed of the lamination sheet 2 is increased to feed the lamination sheet 2 by a length longer than the outer circumferential length corresponding to the number of winds of the lamination sheet 2. Alternatively, when the lamination sheet 2 is to be wound along each of the flat surfaces 21a of the winding shaft 21, the feeding speed of the lamination sheet 2 may be made higher than the speed at which the lamination sheet 2 is wound around the winding shaft 21. Still alternatively, the lamination sheet 2 may be fed in advance and slackened before being wound around the winding shaft 21.

In the above-described preferred embodiment, the feeding device 30 rotates the press roller 34 such that the lamination sheet 2 is fed also by the press roller 34. Alternatively, the feeding device 30 may be configured such that the lamination sheet 2 is fed only by the pair of nip rollers 31. The press roller 34 may merely rotate subordinately. In a configuration in which the press roller 34 is not needed to wind the lamination sheet 2 around the winding shaft 21, the press roller 34 may be omitted.

In the above-described preferred embodiment, the press device 40 includes the pair of leaf springs 42 to spread the slackened parts of the lamination sheet 2 outward from the center of the flat portions 2a. Alternatively, the press device 40 does not need to include an element, such as the leaf springs 42, to spread the slackened parts of the lamination sheet 2. In the case where the lamination sheet 2 is fed by a length longer than the outer circumferential length corresponding to the number of winds of the lamination sheet 2, the function and the effect of alleviating the stress to be applied to the R portions 2b may be provided to some extent even if the slacked parts of the lamination sheet 2 are not spread toward the R portions 2d.

The above-described embodiments do not limit the present invention in any way unless otherwise specified. The technology disclosed herein may be altered in any of various manners. The elements and the processes referred to herein may each be omitted where appropriate, or may be combined in an appropriate manner, unless any specific problem is caused.

This specification includes the following disclosure.

### Item 1:

A method for producing a wound electrode assembly, comprising:
winding a lamination sheet including a band-like positive electrode sheet, a band-like negative electrode sheet, a band-like first separator sheet and a band-like second separator sheet laminated in a predefined order around a winding shaft, the winding the lamination sheet including feeding the lamination sheet and rotating the winding shaft, and the winding shaft having an outer circumferential surface of an oval shape including a pair of flat surfaces facing each other and a pair of arcked surfaces connecting both of ends of the pair of flat surfaces to each other; and
pressing the lamination sheet formed to have an oval shape by the winding, such that a pair of flat portions of the lamination sheet are pressed to each other,
wherein in the winding the lamination sheet, the lamination sheet is fed by, per rotation of the winding shaft, a length longer than an outer circumferential length corresponding to the number of winds of the lamination sheet wound around the winding shaft.

### Item 2:

The method for producing the wound electrode assembly according to item 1, wherein in the winding the lamination sheet, while being wound along each of the arcked surfaces, the lamination sheet is fed by a length longer than the outer circumferential length corresponding to the number of winds of the lamination sheet wound along the each arcked surface.

### Item 3:

The method for producing the wound electrode assembly according to item 1 or 2, wherein the pressing the lamination sheet includes a first pressing of starting pressing the lamination sheet from a part of the pair of flat portions thereof and spreading a pressed region toward a pair of arcked portions of the lamination sheet.

### Item 4:

The method for producing the wound electrode assembly according to item 3, wherein the first pressing uses a press device including:
a pair of press members facing each other and respectively pressing the pair of flat portions of the lamination sheet, and
a pair of leaf springs respectively provided for the pair of press members and each curved to protrude toward the press member facing the corresponding press member.

### Item 5:

An apparatus for producing a wound electrode assembly including a lamination sheet in a wound state, the lamination sheet including a band-like positive electrode sheet, a band-like negative electrode sheet, a band-like first separator sheet and a band-like second separator sheet laminated in a predefined order, the apparatus comprising:
a winding shaft having an outer circumferential surface of an oval shape including a pair of flat surfaces facing each other and a pair of arcked surfaces connecting both of ends of the pair of flat surfaces to each other, the winding shaft allowing the lamination sheet to be wound around the outer circumferential surface thereof;
a winding shaft driving device rotating the winding shaft;
a feeding device feeding the lamination sheet toward the winding shaft; and
a controller controlling the winding shaft driving device to control the rotation of the winding shaft and controlling the feeding device to control a length of the lamination sheet to be fed;
wherein the controller controls the feeding device to feed the lamination sheet by, per rotation of the winding shaft, a length longer than an outer circumferential length corresponding to the number of winds of the lamination sheet wound around the winding shaft.

### Item 6:

The apparatus for producing the wound electrode assembly according to item 5, further comprising a press roller pressing the lamination sheet wound along each of the arcked surfaces of the winding shaft toward the each arcked surface.

### Item 7:

The apparatus for producing the wound electrode assembly according to item 5 or 6, wherein for at least a part of a time period in which the lamination sheet is being wound along each of the arcked surfaces, the controller controls the feeding device to feed the lamination sheet at a speed higher than a speed at which the lamination sheet is wound along the each arcked surface.

### Item 8:

The apparatus for producing the wound electrode assembly according to item 7, wherein:
the feeding device includes:
   a pair of nip rollers rotating while sandwiching the lamination sheet and feeding the lamination sheet toward the winding shaft,
   a nip roller driving device rotating the pair of nip rollers,
   a nip roller moving device causing the pair of nip rollers to be closer to each other such that the pair of nip rollers sandwich the lamination sheet, or causing the pair of nip rollers to be away from each other such that the pair of nip rollers release the lamination sheet,
   a press roller pressing the lamination sheet wound along each of the arcked surfaces of the winding shaft toward the each arcked surface,
   a press roller driving device rotating the press roller, and
   a press roller moving device causing the press roller to contact, or to separate from, each of the arcked surfaces, and
the controller:
   for at least a part of the time period in which the lamination sheet is being wound along each of the arcked surfaces, controls the nip roller moving device to cause the pair of nip rollers to be away from each other, and controls the press roller moving device and the press roller driving device to rotate the press roller in a state where the press roller is in contact with the each arcked surface,
   for the rest of the time period, controls the press roller moving device to cause the press roller to separate from the winding shaft, and controls the nip roller moving device and the nip roller driving device to cause the pair of nip rollers to sandwich and feed the lamination sheet,
   causes the pair of nip rollers to feed the lamination sheet at a speed same as a speed at which the lamination sheet is wound around the winding shaft, and
   causes the press roller to feed the lamination sheet at a speed higher than the speed at which the lamination sheet is wound along each of the arcked surfaces.

### Item 9:

The apparatus for producing the wound electrode assembly according to any one of items 5 through 8, further comprising a press device pressing the lamination sheet, formed to have an oval shape by being wound around the winding shaft, such that a pair of flat portions of the lamination sheet are pressed to each other,
wherein the press device includes:
a pair of press members facing each other and respectively pressing the pair of flat portions of the lamination sheet, and
a pair of leaf springs respectively provided for the pair of press members and each curved to protrude toward the press member facing the corresponding press member.

### Item 10:

A power storage device, comprising:
a wound electrode assembly including a lamination sheet in a state of being wound a plurality of times, the lamination sheet including a band-like positive electrode sheet, a band-like negative electrode sheet, a band-like first separator sheet and a band-like second separator sheet laminated in a predefined order,
wherein:
   the wound electrode assembly is wound to have an oval shape including a pair of flat portions facing each other and a pair of arcked R portions connecting both of ends of the pair of flat portions to each other, and the lamination sheet includes a plurality of curved portions forming the R portions, the plurality of curved portions being laminated on each other in a diametrical direction of the R portions, and
   an inner circumferential length of one curved portion among the plurality of curved portions is longer than an outer circumferential length of another curved portion among the plurality of curved portions immediately inner to the one curved portion.

### Item 11:

The power storage device according to item 10, wherein a space is provided between the one curved portion and the another curved portion immediately inner to the one curved portion.

### Item 12:

The power storage device according to item 10 or 11, wherein:
the lamination sheet includes a plurality of straight portions laminated on each other to form the flat portions, and
the plurality of straight portions have an identical length to each other.

## Claims

1. A method for producing a wound electrode assembly (1), comprising:
winding a lamination sheet (2) including a band-like positive electrode sheet (3), a band-like negative electrode sheet (4), a band-like first separator sheet (5) and a band-like second separator sheet (6) laminated in a predefined order around a winding shaft (21), the winding the lamination sheet (2) including feeding the lamination sheet (2) and rotating the winding shaft (21), and the winding shaft (21) having an outer circumferential surface of an oval shape including a pair of flat surfaces (21a) facing each other and a pair of arcked surfaces (21b) connecting both of ends of the pair of flat surfaces (21a) to each other; and
pressing the lamination sheet (2) formed to have an oval shape by the winding, such that a pair of flat portions (2a) of the lamination sheet (2) are pressed to each other,
wherein in the winding the lamination sheet (2), the lamination sheet (2) is fed by, per rotation of the winding shaft (21), a length longer than an outer circumferential length corresponding to the number of winds of the lamination sheet (2) wound around the winding shaft (21).

2. The method for producing the wound electrode assembly (1) according to claim 1, wherein in the winding the lamination sheet (2), while being wound along each of the arcked surfaces (21b), the lamination sheet (2) is fed by a length longer than the outer circumferential length corresponding to the number of winds of the lamination sheet (2) wound along the each arcked surface (21b).

3. The method for producing the wound electrode assembly (1) according to claim 1 or 2, wherein the pressing the lamination sheet (2) includes a first pressing of starting pressing the lamination sheet (2) from a part of the pair of flat portions (2a) thereof and spreading a pressed region toward a pair of arcked portions (2b) of the lamination sheet (2).

4. The method for producing the wound electrode assembly (1) according to claim 3, wherein the first pressing uses a press device (40) including:
a pair of press members (41) facing each other and respectively pressing the pair of flat portions (2a) of the lamination sheet (2), and
a pair of leaf springs (42) respectively provided for the pair of press members (41) and each curved to protrude toward the press member (41) facing the corresponding press member (41).

5. An apparatus (10) for producing a wound electrode assembly (1) including a lamination sheet (2) in a wound state, the lamination sheet (2) including a band-like positive electrode sheet (3), a band-like negative electrode sheet (4), a band-like first separator sheet (5) and a band-like second separator sheet (6) laminated in a predefined order, the apparatus (10) comprising:
a winding shaft (21) having an outer circumferential surface of an oval shape including a pair of flat surfaces (21a) facing each other and a pair of arcked surfaces (21b) connecting both of ends of the pair of flat surfaces (21a) to each other, the winding shaft (21) allowing the lamination sheet (2) to be wound around the outer circumferential surface thereof;
a winding shaft driving device (22) rotating the winding shaft (21);
a feeding device (30) feeding the lamination sheet (2) toward the winding shaft (21); and
a controller (50) controlling the winding shaft driving device (22) to control the rotation of the winding shaft (21) and controlling the feeding device (30) to control a length of the lamination sheet (2) to be fed;
wherein the controller (50) controls the feeding device (30) to feed the lamination sheet (2) by, per rotation of the winding shaft (21), a length longer than an outer circumferential length corresponding to the number of winds of the lamination sheet (2) wound around the winding shaft (21) .

6. The apparatus (10) for producing the wound electrode assembly (1) according to claim 5, further comprising a press roller (34) pressing the lamination sheet (2) wound along each of the arcked surfaces (21b) of the winding shaft (21) toward the each arcked surface (21b).

7. The apparatus (10) for producing the wound electrode assembly (1) according to claim 5 or 6, wherein for at least a part of a time period in which the lamination sheet (2) is being wound along each of the arcked surfaces (21b), the controller (50) controls the feeding device (30) to feed the lamination sheet (2) at a speed higher than a speed at which the lamination sheet (2) is wound along the each arcked surface (21b) .

8. The apparatus (10) for producing the wound electrode assembly (1) according to claim 7, wherein:
the feeding device (30) includes:
a pair of nip rollers (31) rotating while sandwiching the lamination sheet (2) and feeding the lamination sheet (2) toward the winding shaft (21),
a nip roller driving device (32) rotating the pair of nip rollers (31),
a nip roller moving device (33) causing the pair of nip rollers (31) to be closer to each other such that the pair of nip rollers (31) sandwich the lamination sheet (2), or causing the pair of nip rollers (31) to be away from each other such that the pair of nip rollers (31) release the lamination sheet (2),
a press roller (34) pressing the lamination sheet (2) wound along each of the arcked surfaces (21b) of the winding shaft (21) toward the each arcked surface (21b),
a press roller driving device (35) rotating the press roller (34), and
a press roller moving device (37) causing the press roller (34) to contact, or to separate from, each of the arcked surfaces (21b), and
the controller (50):
for at least a part of the time period in which the lamination sheet (2) is being wound along each of the arcked surfaces (21b), controls the nip roller moving device (33) to cause the pair of nip rollers (31) to be away from each other, and controls the press roller moving device (37) and the press roller driving device (35) to rotate the press roller (34) in a state where the press roller (34) is in contact with the each arcked surface (21b),
for the rest of the time period, controls the press roller moving device (37) to cause the press roller (34) to separate from the winding shaft (21), and controls the nip roller moving device (33) and the nip roller driving device (32) to cause the pair of nip rollers (31) to sandwich and feed the lamination sheet (2),
causes the pair of nip rollers (31) to feed the lamination sheet (2) at a speed same as a speed at which the lamination sheet (2) is wound around the winding shaft (21), and
causes the press roller (34) to feed the lamination sheet (2) at a speed higher than the speed at which the lamination sheet (2) is wound along each of the arcked surfaces (21b).

9. The apparatus (10) for producing the wound electrode assembly (1) according to any one of claims 5 through 8, further comprising a press device (40) pressing the lamination sheet (2), formed to have an oval shape by being wound around the winding shaft (21), such that a pair of flat portions (2a) of the lamination sheet (2) are pressed to each other,
wherein the press device (40) includes:
a pair of press members (41) facing each other and respectively pressing the pair of flat portions (2a) of the lamination sheet (2), and
a pair of leaf springs (42) respectively provided for the pair of press members (41) and each curved to protrude toward the press member (41) facing the corresponding press member (41).

10. A power storage device (100), comprising:
a wound electrode assembly (1) including a lamination sheet (2) in a state of being wound a plurality of times, the lamination sheet (2) including a band-like positive electrode sheet (3), a band-like negative electrode sheet (4), a band-like first separator sheet (5) and a band-like second separator sheet (6) laminated in a predefined order,
wherein:
the wound electrode assembly (1) is wound to have an oval shape including a pair of flat portions (1a) facing each other and a pair of arcked R portions (1b) connecting both of ends of the pair of flat portions (1a) to each other, and the lamination sheet (2) includes a plurality of curved portions (2d) forming the R portions (1b), the plurality of curved portions (2d) being laminated on each other in a diametrical direction of the R portions (1b), and
an inner circumferential length of one curved portion (2d) among the plurality of curved portions (2d) is longer than an outer circumferential length of another curved portion (2d) among the plurality of curved portions (2d) immediately inner to the one curved portion (2d).

11. The power storage device (100) according to claim 10, wherein a space (1c) is provided between the one curved portion (2d) and the another curved portion (2d) immediately inner to the one curved portion (2d).

12. The power storage device (100) according to claim 10 or 11, wherein:
the lamination sheet (2) includes a plurality of straight portions (2c) laminated on each other to form the flat portions (1a), and
the plurality of straight portions (2c) have an identical length to each other.
